# EUROPÄISCHE PATENTSCHRIFT

(11) **EP 2 695 699 B1**
(45) Veröffentlichungstag und Bekanntmachung des Hinweises auf die Patenterteilung: **13.03.2019**
(21) Anmeldenummer: 12179976.1
(22) Anmeldetag: 10.08.2012
(51) Int. Cl.: B23K 20/12, B23K 20/24

(54) **Reibschweißen unterschiedlicher Fügepartner**
Friction welding of dissimilar components
Soudage par friction d'éléments différents l'un de l'autre

(43) Veröffentlichungstag der Anmeldung: 12.02.2014
(73) Patentinhaber: MTU Aero Engines AG, 80995 München (DE)
(72) Erfinder: Göhler, Thomas, 80999 München (DE); Weiß, Michael, 85221 Dachau (DE); Schneefeld, Dieter, 85253 Walkertshofen (DE); Richter, Karl-Hermann, 85229 Markt Indersdorf (DE)

(56) Entgegenhaltungen:
- DE-A1-102007 036 972

## Beschreibung

### HINTERGRUND DER ERFINDUNG

### GEBIET DER ERFINDUNG

Die vorliegende Erfindung betrifft ein Verfahren zur Herstellung von Werkstoffverbunden unterschiedlicher Werkstoffe mit Hilfe von Reibschweißen, bei welchem mindestens ein erstes Bauteil aus einem ersten Werkstoff und mindestens ein zweites Bauteil aus einem zweiten Werkstoff bereit gestellt werden, wobei erster und zweiter Werkstoff unterschiedlich sind und wobei die Bauteile durch Reibschweißen miteinander gefügt werden, so dass sich eine stoffschlüssige Verbindung ergibt.

### STAND DER TECHNIK

Das Fügen von Bauteilen, die aus unterschiedlichen Werkstoffen gebildet sind, ist in vielen Bereichen der Technik eine Notwendigkeit. Je nachdem welche Fügepartner beteiligt sind und insbesondere je nachdem aus welchen Werkstoffen die Fügepartner gebildet sind, ergeben sich unterschiedliche Anforderungen beim Fügen der verschiedenen Werkstoffe.

Bei der Herstellung von sogenannten Turbinenblisken (Blisk ist ein Kunstwort aus den Begriffen Blade and Disk), d.h. Einheiten aus einer Scheibe und einer Vielzahl von Schaufeln für thermische Strömungsmaschinen, wie z.B. stationäre Gasturbinen oder Flugtriebwerke, müssen Hochtemperaturlegierungen miteinander verbunden werden, die auf Grund des Einsatzgebietes eine hohe Warmfestigkeit aufweisen müssen. Entsprechend gibt es beim Verbinden mittels Reibschweißen die Problematik, dass die durch die Reibung erzeugte Energie für die hochtemperaturbeständigen Werkstoffe nicht ausreichend sein kann, um die gewünschte stoffschlüssige Verbindung herzustellen. Dies gilt insbesondere dann, wenn Hochtemperaturwerkstoffe eingesetzt werden, die eine hohe Warmfestigkeit aufweisen, wie dies üblicherweise für Werkstoffe in thermischen Strömungsmaschinen der Fall. Entsprechend kann es beim Fügen unterschiedlicher Werkstoffe passieren, dass eine Stauchung bzw. ein Materialfliesen lediglich in einem der Werkstoffe stattfindet und somit keine ausreichende Werkstoffmischung in der Fügezone erfolgt.

Beispielsweise kann dies beim Fügen von Schaufeln aus der Laufschaufellegierung LEK94 (siehe DE 101 00 790 A1) mit Scheiben aus den Werkstoffen Inconell 718 oder Udimet 720 auftreten. Hier kann es vorkommen, dass schaufelseitig keine Verformung oder nur eine geringe Verformung mit einem geringen Materialaustrieb stattfindet, so dass für eine effektive stoffschlüssige Verbindung eine zu geringe Werkstoffvermischung stattfindet.

Um dieses Problem zu lösen, ist es aus dem Stand der Technik bekannt, beim Reibschweißen eine zusätzliche Heizung oder Vorheizung von wenigstens einem der Fügepartner vorzusehen, um beim Zusammenpressen der Fügepartner eine gleichmäßige Verformung und eine ausreichende Werkstoffdurchmischung zu erzielen. Bei der unterschiedlichen Erwärmung der Fügepartner durch beispielsweise induktives Vorheizen von einem Fügepartner kommt es jedoch zu Temperaturunterschieden bei den Fügepartnern und im Bereich der Fügezone, die sowohl für die angestrebte Werkstoffvermischung als auch bei der nachfolgenden Abkühlung nachteilig sein können.

Darüber hinaus ist es beispielsweise aus der US 773,107,5 bekannt bei Reibschweißverbindungen von einkristallinen Werkstoffen, wie sie beispielsweise auch bei Turbinenschaufeln Verwendung finden, die Ausrichtung der Fügepartner an die Gleitebenen des Einkristalls anzupassen, um hohe Verformungskräfte beim Aufeinanderpressen der Fügepartner zu vermeiden. Allerdings sind hier Einschränkungen in der Weise gegeben, dass für die Verwendung des herzustellenden Bauteils bestimmte Kristallorientierungen vorteilhaft sind, die die Ausrichtung beim Herstellungsverfahren begrenzen.

Die DE 10 2007 036 972 A1 beschreibt ein Verfahren zum Fügen von zwei Bauteilen aus unterschiedlichen Werkstoffen, wobei zumindest eines der Bauteile vor dem Schweißprozess mechanisch verfestigt und wärmebehandelt wird. Dabei besteht jedoch das Problem, dass Verfahren zum mechanischen Verfestigen von Werkstoffen aufwändig sind.

### OFFENBAHRUNG DER ERFINDUNG

### AUFGABE DER ERFINDUNG

Es ist deshalb Aufgabe der vorliegenden Erfindung ein Verfahren zum Fügen von Bauteilen mit unterschiedlichen Werkstoffen bereit zu stellen, welches einfach durchführbar ist, aber gleichzeitig eine gleichmäßige Verformung der Fügepartner und eine gute Werkstoffdurchmischung ermöglicht, so dass eine zuverlässige Ausbildung einer stoffschlüssigen Verbindung erreicht werden kann. Das Verfahren soll insbesondere zur Herstellung von Komponenten einer thermischen Strömungsmaschine vorzugsweise aus Hochtemperaturlegierungen, wie Nickelbasislegierungen, und insbesondere zur Herstellung von Turbinenblisken geeignet sein.

### TECHNISCHE LÖSUNG

Diese Aufgabe wird gelöst mit einem Verfahren mit den Merkmalen des Anspruchs 1. Vorteilhafte Ausgestaltungen sind Gegenstand der abhängigen Ansprüche.
Die vorliegende Erfindung geht aus von der Erkenntnis, dass bei der Herstellung einer stoffschlüssigen Verbindung von Bauteilen aus unterschiedlichen Werkstoffen mit Hilfe des Reibschweißens die oben geschilderte Probleme dadurch auftreten, dass im Bereich der Fügezone unterschiedliche Werkstoffeigenschaften vorliegen, die ein Fügen erschweren oder verhindern. Es ist deshalb die Idee der vorliegenden Erfindung mindestens eines der zu fügenden Bauteile vor dem Reibschweißen zumindest in einen Randbereich des Bauteils, der mit dem anderen Bauteil gefügt werden soll, hinsichtlich wenigstens einer seiner Werkstoffeigenschaften so zu modifizieren, dass sich das modifizierte Bauteil in der entsprechenden Werkstoffeigenschaft dem anderem Bauteil annähert.
Die Modifizierung der wenigstens einen Werkstoffeigenschaft kann die Warmfestigkeit zumindest eines der beteiligten Werkstoffe betreffen, da die Warmfestigkeit der Fügepartner das Reibschweißen beeinflusst. Entsprechend kann die Modifizierung von mindestens einem der beteiligten Bauteile in zumindest einen Randbereich dadurch erfolgen, dass der Randbereich, der für das Fügen mittels Reibschweißen vorgesehen ist, verfestigt oder entfestigt wird, so dass die Festigkeit und insbesondere die Warmfestigkeit der beteiligten Werkstoffe einander angenähert wird.
Bei gleichen oder zumindest annähernd gleichen Warmfestigkeiten der beteiligten Bauteile bzw. bei einer ausreichend geringen Differenz der Warmfestigkeit der zu fügenden Werkstoffe kann beim Reibschweißen eine ausreichende Verformung beider Fügepartner und somit eine ausreichende Durchmischung der Werkstoffe im Fügebereich erzielt werden.

Somit kann der Randbereich eines Bauteils, welches eine gegenüber dem anderen, zu verbindenden Bauteil geringere Festigkeit, insbesondere Warmfestigkeit aufweist, verfestigt werden, während andererseits das Bauteil mit einer höheren Festigkeit, insbesondere höheren Warmfestigkeit, entfestigt werden kann, sodass die Festigkeit bzw. die Warmfestigkeit verringert wird. Neben der Möglichkeit die Verfestigung oder Entfestigung lediglich an einem Bauteil vorzunehmen, ist es selbstverständlich auch denkbar, sowohl bei dem einen Bauteil eine Verfestigung als auch bei dem anderen Bauteil eine Entfestigung vorzunehmen. Dies gilt selbstverständlich auch für die Anpassung anderer und/oder weiterer Werkstoffeigenschaften.

Zur Modifizierung der Bauteile können verschiedene Verfahren eingesetzt werden. Beispielsweise kann für das Verfestigen der Randschicht eine Nitrierung oder Borierung der Oberfläche vorgenommen werden. Auch ein Umschmelzlegieren mit der Zugabe von verfestigenden Legierungskomponenten, wie beispielsweise von Ausscheidungen bildenden Elementen, können eingesetzt werden. Bei Nickelbasis - Superlegierungen können beispielsweise Elemente zulegiert werden, die die Bildung von γ'- oder γ"- Phasen fördern.
Eine weitere Möglichkeit besteht in dem sogenannten Peening, bei dem gezielt Druckspannungen zur Verfestigung einer Randzone in einer Bauteiloberfläche eingebracht werden. Beispielsweise kann hierzu das sogenannten Laser Shock Peening verwendet werden, bei dem leistungsstarke Laserimpulse auf eine mit einer Beschichtung versehene Oberfläche eingestrahlt werden. Das schlagartige Verdampfen der Beschichtung, wie beispielsweise eines Lackes, erzeugt Schockwellen, welche den oberflächennahen Bereich verformen und damit verfestigen.

Darüber hinaus können zum Entfestigen Verfahren eingesetzt werden, die beispielsweise das Umschmelzen der Oberfläche eines Bauteils mittels Laser - oder Elektronenstrahlen umfassen, um ein duktiles Gefüge einzustellen. Bei Nickelbasis - Legierungen kann z.B. ein Aufschmelzen dazu führen, dass feinere Ausscheidungen in Form der γ'-Phase vorliegen, die sich beim Reibschweißen schneller auflösen und damit zu einer Verringerung der Warmfestigkeit zumindest im Fügebereich des entsprechenden Bauteils führen.

Ganz allgemein können Wärmebehandlungen zur Einstellung des Gefüges im Randbereich des Bauteils verwendet werden, um Werkstoffeigenschaften anzupassen bzw. insbesondere eine Verfestigung oder Entfestigung des Fügebereichs zu bewirken. Unter Wärmebehandlung werden sowohl Temperaturerhöhungen als auch Temperaturerniedrigungen verstanden.

Ein weiteres Verfahren zur Beeinflussung der Werkstoffeigenschaften in der Fügezone besteht darin chemische Reaktionen an der Oberfläche auszulösen. Mit den chemischen Reaktionen können einerseits neue Reaktionsprodukte erzeugt oder Bestandteile aus dem Werkstoff entfernt werden. Beispielsweise kann durch das lokale Oxidieren von Nickelbasis - Legierungen der Randbereich des zu verbindenden Bauteils an Aluminium verarmen, sodass durch Entfernung des γ'-Phase bildenden Aluminiums der Anteil von γ'- Ausscheidungen verringert werden kann.

Weiterhin ist es auch möglich durch lokales Aufheizen beziehungsweise Lösungsglühen Ausscheidungen in einem Werkstoff und insbesondere bei Nickelbasislegierungen die γ'-Ausscheidungen aufzulösen, um so die Warmfestigkeit zu reduzieren. Nach entsprechend schneller Abkühlung (Abschreckung) liegen die Ausscheidungen bzw. bei Nickelbasissuperlegierungen die γ'- Phasen in sehr viel feinerer Form vor, so dass damit eine Absenkung der Warmfestigkeit verbunden ist.

Entsprechend lässt sich die vorliegende Erfindung vorteilhaft bei der Herstellung von so genannten Blisken für Strömungsmaschinen einsetzen, wobei das erste Bauteil eine Scheibe (Disk) ist und das zweite Bauteil eine Schaufel (Blade). Die beiden Bauteile könne entsprechend ihres Einsatzgebietes aus dafür geeigneten unterschiedlichen Werkstoffen gebildet sein, wie beispielweise die Schaufel aus LEK 94 und die Scheibe aus Inconell 718 oder Udimet 720. Durch die oben angesprochenen Maßnahmen lassen sich die Warmfestigkeiten der entsprechenden Werkstoffe aneinander annähern, sodass durch Reibschweißen qualitativ hochwertige, stoffschlüssige Verbindungen erhalten werden können. Hierbei können bei den für die Blisken eingesetzten Nickelbasislegierungen insbesondere Maßnahmen zur Modifizierung der γ'-Phasen getroffen werden, wie beispielsweise die zusätzliche Bildung von Ausscheidungen durch Umschmelzlegieren, Verfeinerung der γ'- Phasen durch Lösungsglühen bzw. Oberflächenumschmelzen und Abschrecken oder Verringerung der Anteile an γ'- Phasen durch lokales Oxidieren zum Entfernen von Aluminium. Auch eine Vergröberung der γ'- Phasen durch entsprechende Wärmebehandlung ist möglich.

Derartige Modifizierungen lassen sich jedoch nicht nur für γ'- Phasen bei Nickelbasislegierungen einsetzen, sondern allgemein bei Ausscheidungen von Legierungen.

Entsprechend kann die vorliegende Erfindung allgemein beim Fügen von unterschiedlichen Werkstoffen eingesetzt werden und insbesondere auch bei Kobaltbasislegierungen oder Eisenbasislegierungen sowie anderen Hochtemperaturlegierungen.

## Patentansprüche

1. Verfahren zur Herstellung von Werkstoffverbunden unterschiedlicher Werkstoffe mit Hilfe von Reibschweißen, bei welchem mindestens ein erstes Bauteil aus einem ersten Werkstoff und mindestens ein zweites Bauteil aus einem zweiten Werkstoff bereitgestellt werden, wobei erster und zweiter Werkstoff unterschiedlich sind, und wobei die Bauteile durch Reibschweißen miteinander gefügt werden, so dass sich eine stoffschlüssige Verbindung ergibt,
**dadurch gekennzeichnet, dass**
zumindest eines der Bauteile vor dem Reibschweißen zumindest bezüglich seiner Warmfestigkeit in zumindest einem Randbereich des Bauteils, der mit dem anderen Bauteil gefügt werden soll, mittels chemischer Reaktion oder mittels einer Behandlung zur Bildung, Vergröberung, Verfeinerung oder Verringerung von Ausscheidungen so modifiziert wird, dass sich das modifizierte Bauteil zumindest bezüglich seiner Warmfestigkeit dem anderen Bauteil annähert.

2. Verfahren nach Anspruch 1,
**dadurch gekennzeichnet, dass**
der Randbereich des modifizierten Bauteils verfestigt oder entfestigt wird.

3. Verfahren nach einem der vorhergehenden Ansprüche,
**dadurch gekennzeichnet, dass**
der Randbereich des zu modifizierenden Bauteils mit mindestens einer Behandlung modifiziert wird, die aus der Gruppe ausgewählt wird, die Nitrieren, Borieren, Oxidieren, Umschmelzen insbesondere mittels Laser- oder Elektronenstrahlen, Umschmelzlegieren, Legieren und Lösungsglühen umfasst.

4. Verfahren nach einem der vorhergehenden Ansprüche,
**dadurch gekennzeichnet, dass**
das erste Bauteil eine Scheibe einer Strömungsmaschine und das zweite Bauteil eine Schaufel einer Strömungsmaschine ist.

5. Verfahren nach einem der vorhergehenden Ansprüche,
**dadurch gekennzeichnet, dass**
die Werkstoffe aus der Gruppe ausgewählt werden, die Nickelbasislegierungen, Inconel 718, LEK94, Udimet 720, Kobaltbasislegierungen und Eisenbasislegierungen umfassen.

6. Verfahren nach einem der vorhergehenden Ansprüche,
**dadurch gekennzeichnet, dass**
die Ausscheidungen γ'- Phasen sind.

7. Verfahren nach einem der vorhergehenden Ansprüche,
**dadurch gekennzeichnet, dass**
mit dem Verfahren eine Turbinenblisk hergestellt wird.

## Claims

1. Method for producing composite materials from different materials by means of friction welding, in which at least a first component made of a first material and at least a second component made of a second material are provided, the first and the second material being different, and the components being joined together by friction welding so as to produce an integral bond,
**characterized in that**
before the friction welding at least one of the components is modified, at least in terms of its heat resistance in at least one edge region of the component that is intended to be joined to the other component, by means of a chemical reaction or by means of a treatment in order to form, coarsen, refine or reduce precipitates such that the modified component approximates the other component at least in terms of its heat resistance.

2. Method according to claim 1,
**characterized in that**
the edge region of the modified component is hardened or softened.

3. Method according to either of the preceding claims,
**characterized in that**
the edge region of the component to be modified is modified by means of at least one treatment selected from the group comprising nitriding, boriding, oxidizing, remelting in particular by means of laser or electron beams, remelt-alloying, alloying and solution annealing.

4. Method according to any of the preceding claims,
**characterized in that**
the first component is a disc of a turbomachine and the second component is a blade of a turbomachine.

5. Method according to any of the preceding claims,
**characterized in that**
the materials are selected from the group comprising the nickel-based alloys, Inconel 718, LEK94, Udimet 720, cobalt-based alloys and iron-based alloys.

6. Method according to any of the preceding claims,
**characterized in that**
the precipitates are y' phases.

7. Method according to any of the preceding claims,
**characterized in that**
a turbine blisk is produced using the method.

## Revendications

1. Procédé de fabrication par soudage par friction de matériaux composites constitués de matériaux différents, dans lequel au moins un premier composant constitué d'un premier matériau et au moins un second composant constitué d'un second matériau sont fournis, les premier et second matériaux étant différents, et dans lequel les composants sont joints par soudage par friction de manière à obtenir une connexion par liaison de matière,
**caractérisé en ce que**
au moins un des composants est modifié avant le soudage par friction, au moins en ce qui concerne sa résistance à la chaleur dans au moins une zone périphérique du composant devant être assemblé avec l'autre composant, par réaction chimique ou par traitement pour la formation, le grossissement, l'affinage ou la réduction de précipités, de sorte que le composant modifié se rapproche de l'autre composant au moins en ce qui concerne sa résistance à la chaleur.

2. Procédé selon la revendication 1,
**caractérisé en ce que**
la zone périphérique du composant modifié est solidifiée ou disloquée.

3. Procédé selon l'une des revendications précédentes,
**caractérisé en ce que**
la zone périphérique du composant à modifier est modifiée avec au moins un traitement choisi dans le groupe comprenant la nitruration, la boruration, l'oxydation, la refusion, en particulier au moyen de faisceaux laser ou de faisceaux d'électrons, l'alliage par refusion, l'alliage et le recuit de mise en solution.

4. Procédé selon l'une des revendications précédentes,
**caractérisé en ce que**
le premier composant est un disque de turbomachine et le second composant est une aube d'une turbomachine.

5. Procédé selon l'une des revendications précédentes,
**caractérisé en ce que**
les matériaux sont choisis dans le groupe comprenant les alliages à base de nickel, Inconel 718, LEK94, Udimet 720, les alliages à base de cobalt et les alliages à base de fer.

6. Procédé selon l'une des revendications précédentes,
**caractérisé en ce que**
les précipités sont des phases y'.

7. Procédé selon l'une des revendications précédentes,
**caractérisé en ce que**
le procédé permet de produire un disque aubagé monobloc de turbine.
